# EUROPEAN PATENT APPLICATION

(11) **EP 2 604 648 A1**
(43) Date of publication of application: **19.06.2013**
(21) Application number: 11192962.6
(22) Date of filing: 12.12.2011
(51) Int. Cl.: C08K 3/22

(54) **Thermoplastic composition**

(71) Applicant: Mitsubishi Chemical Europe GmbH, 40549 Düsseldorf (DE)
(72) Inventor: Schrauwen, Bernardus Antonius Gerardus, 5595 CL Leende (NL)
(74) Representative: HOFFMANN EITLE

(57) **Abstract**

The present invention relates to a thermoplastic composition comprising: a) a thermoplastic resin and b) a metal compound in an amount of at least 1 wt% with respect to the weight of the total composition, wherein the metal compound is represented by the formula AB₂O₄, wherein A stands for copper and optionally one or more further metals and B stands for a combination of chromium and manganese and optionally one or more further metals.

## Description

The present invention relates to a thermoplastic composition comprising a thermoplastic resin and a laser direct structuring additive. The invention also relates to a process for producing a circuit carrier by a laser direct structuring process. The invention also relates to a circuit carrier obtainable thereby.

Polymer compositions comprising a polymer and a laser direct structuring (LDS) additive are for example described in US-B2-7060421 and WO-A-2009024496. Such polymer compositions can advantageously be used in an LDS process for producing a nonconductive part on which conductive tracks are to be formed by irradiating areas of said part with laser radiation to activate the plastic surface at locations where the conductive path is to be situated and subsequently metalizing the irradiated areas to accumulate metal on these areas. WO-A-2009024496 describes aromatic polycarbonate compositions containing a metal compound capable of being activated by electromagnetic radiation and thereby forming elemental metal nuclei and 2.5-50 wt% of a rubber like polymer, the latter being added to reduce degradation of the polycarbonate due to the presence of such metal compound in aromatic polycarbonate compositions.

Although the LDS additives known in the prior art are satisfactory in certain situations, there is a constant need for an improved LDS additive.

It is an object of the present invention to provide a thermoplastic composition which shows an improved plating performance.

Accordingly, the present invention provides a thermoplastic composition comprising:
a) a thermoplastic resin and
b) a metal compound in an amount of at least 1 wt% with respect to the weight of the total composition,
wherein the metal compound is represented by the formula AB₂O₄, wherein A stands for copper and optionally one or more further metals and B is a combination of chromium and manganese and optionally one or more further metals.

Said one or more further metals in the A component of the formulas is a metal cation having a valence of 2. The further metal may e.g. be selected from the group consisting of cadmium, zinc, cobalt, magnesium, tin, titanium, iron, aluminum, nickel, manganese, chromium, and combinations of two or more of these.

Said one or more further metals in the B component of the formulas is a metal cation having a valence of 3. The further metal may e.g. be selected from the group consisting of cadmium, nickel, zinc, copper, cobalt, magnesium, tin, titanium, iron, aluminum, , and combinations of two or more of these.

Surprisingly, the inventors have found that the thermoplastic composition according to the present invention shows an improved plating performance. It has further been found that with the composition according to the invention the toughness as for example expressed in Izod Notched impact strength can be remarkably increased, especially at a low temperature. It has surprisingly been found that the Izod Notched impact strength at -20 °C (measured at a sample thickness of 3.2 mm or less according to ISO 180/4A) of a molded part of the polycarbonate composition can be increased to a value higher than 25 kJ/m², even higher than 30 kJ/m², even higher than 35 kJ/m².

The metal compound in the thermoplastic composition according to the present invention acts as a laser direct structuring (LDS) additive that enables the composition to be used in a laser direct structuring process.

In a laser direct structuring process, a thermoplastic composition comprising a thermoplastic resin and a laser direct structuring additive is provided and the thermoplastic composition is irradiated at areas on which conductive tracks are to be formed with laser radiation. Subsequently the irradiated areas are selectively metalized to form conductive tracks. No metallization occurs on the areas that are not irradiated with laser radiation. The metallization can be done e.g. by a standard electroless plating process, such as a copper plating process.

Without wanting to be bound by any theory, it is believed that the laser direct structuring additive may be capable of being activated by laser radiation and thereby form elemental metal particles. It is believed that these metal particles act as nuclei for copper deposition in a standard electroless copper plating process and form the basis for the formation of conductive tracks. It is also possible that the radiation is not directly absorbed by the laser direct structuring additive, but is absorbed by other substances which then transfer the absorbed energy to the laser direct structuring additive and thus bring about the liberation of elemental metal.

The laser radiation may be UV light (wavelength from 100 to 400 nm), visible light (wavelength from 400 to 800 nm), or infrared light (wavelength from 800 to 25 000 nm). Other preferred forms of radiation are X-rays, gamma rays, and particle beams (electron beams, α-particle beams, and β-particle beams). The laser radiation is preferably infrared light radiation, more preferably with a wavelength of 1064 nm.

Preferably, the component b) present in the composition according to the present invention comprises at least 85 wt% of the total weight of Cu and Cr with respect to the total weight of the metals present in the metal compound. More preferably, the metal compound in the composition according to the present invention comprises at least 90 wt% of the total weight of Cu and Cr with respect to the total weight of the metals present in the metal compound. Preferably, the metal compound in the composition according to the present invention comprises at most 99 wt% of the total weight of Cu and Cr with respect to the total weight of the metals present in the metal compound.

Preferably, the component b) present in the composition according to the present invention comprises at least 1 wt% of Mn with respect to the total weight of the metals present in the metal compound. More preferably, the metal compound comprises at least 2 wt%, more preferably at least 3 wt% or even more preferably at least 5 wt% of Mn with respect to the total weight of the metals present in the metal compound. Preferably, the metal compound comprises at most 15 wt% of Mn with respect to the total weight of the metals present in the metal compound. More preferably, the metal compound comprises at most 12 wt%, more preferably at most 10 wt % of Mn with respect to the total weight of the metals present in the metal compound.

Preferably, the component b) present in the composition according to the present invention comprises at least 95 wt% of the total weight of Cu, Cr and Mn with respect to the total weight of the metals present in the metal compound. More preferably, the metal compound in the composition according to the present invention comprises at least 98 wt%, even more preferably at least 99 wt%, of the total weight of Cu, Cr and Mn with respect to the total weight of the metals present in the metal compound.
In particularly preferred embodiments, the component b) comprises at least 1 wt% of Mn with respect to the total weight of the metals present in the metal compound and at least 95 wt% of the total weight of Cu, Cr and Mn with respect to the total weight of the metals present in the metal compound.

The amounts of each of the metals present in the metal compound may be determined by X-ray fluorescence analysis. XRF analysis may e.g. be done using AXIOS WDXRF spectrometer from PANalytical, in conjunction with the software Omnian.

The component b) may be in the form of particles when added to prepare the thermoplastic composition according to the present invention. The component b) preferably has a particle size of D50 of 1-1.5 µm. It was found that the component b) having this particle size range was especially advantageous for the plating performance. Preferably, the component b) preferably has a particle size of D10 of 0.3-1 µm. Preferably, the component b) preferably has a particle size of D90 of 1.5-10 µm. The particle size may be determined by light scattering technology. For example, Microtrac full range analyzer (FRA) may be used.

The concentration of the component b) present in the composition of the present invention is at least 1 wt%, preferably between 2 wt% and 25 wt%, more preferably between 3 and 20 wt%, even more preferably between 4 wt% and 15 wt%, and particularly preferably from 5 wt% up to 10 wt%, with respect to the weight of the total composition.

The concentration of a) thermoplastic resin in the composition of the present invention is preferably between 45 wt% and 99 wt%, more preferably between 70 wt% and 97 wt%, with respect to the weight of the total composition.

Examples of thermoplastic resins that may be present in the composition according to the invention include, but are not limited to polycarbonate, in particular aromatic polycarbonate, polyamide, polyester, polyesteramide, polystyrene, polymethyl methacrylate or a combination of such resins. The resins may be homopolymers, copolymers or mixtures thereof, and may be branched or non-branched.

Examples of suitable polyamides (PA) are aliphatic polyamides, that may eventually be branched polyamides, such as PA6, PA46, PA66, PA6/66, PA 11, PA12, semi aromatic polyamides as MXD6, PA6I/6T, PA66/6T, PA4T fully aromatic polyamides and copolymers and blends of the listed polyamides.

Examples of suitable polyesters are polyethylene terephtalate (PET), polybutylene terephtalate (PBT), polypropylene terephtalate (PPT), polyethylene naphtanoate (PEN), polybutylene naphtanoate (PBN). Preferred polyesters are polyethylene terephtalate and polybutylene terephtalate.

In preferred embodiments, the thermoplastic resin comprises a polycarbonate-based resin. The polycarbonate-based resin may be selected from a polycarbonate or a resin blend that includes a polycarbonate. The polycarbonates may be homopolymers, copolymers and mixtures thereof, and may be branched or non-branched. Suitable polycarbonate-based resins are described e.g. in US2009/0292048, which is incorporated herein by reference.

Polycarbonates including aromatic carbonate chain units include compositions having structural units of the formula (I):

-R¹-O-CO-O- (I)

in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A², Illustrative examples of radicals of this type are -O-, -S-, -S(O)-, -S(O2)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Suitable aromatic polycarbonates include polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are:
4,4'-dihydroxybiphenyl, 2,2-bis(4-hydroxyphenyl)propane (bisphenol A),
2,2-bis(4-hydroxy-3-methylphenyl)propane, 2,2-bis-(3-chloro-4-hydroxyphenyl)-propane, 2,2-bis-(3,5-dimethyl-4-hydroxyphenyl)-propane,
2,4-bis-(4-hydroxyphenyl)-2-methylbutane,
2,4-bis-(3,5-dimethyl-4-hydroxyphenyl)-2-methylbutane, 4,4-bis(4-hydroxyphenyl)heptane, bis-(3,5-dimethyl-4-hydroxyphenyl)-methane, 1,1-bis-(4-hydroxyphenyl)-cyclohexane,
1,1-bis-(3,5-dimethyl-4-hydroxyphenyl)-cyclohexane,
2,2-(3,5,3',5'-tetrachloro-4,4'-dihydroxydiphenyl)propane,
2,2-(3,5,3',5'-tetrabromo-4,4'-dihydroxydiphenyl)propane,
(3,3'-dichloro-4,4'-dihydroxyphenyl)methane, bis-(3,5-dimethyl-4-hydroxyphenyl)-sulphon, bis-4-hydroxyphenylsulphon, bis-4-hydroxyphenylsulphide,

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonates in the composition according to the invention may be prepared using a catalyst, an acid acceptor and a compound for controlling the molecular mass.

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular mass are monovalent phenols such as phenol, p-alkylphenols and para-bromophenol and secondary amines.

The thermoplastic resin may be a blend of, on one hand, resins such as polycarbonate, polyamide, polyester, polyesteramide, polystyrene, polymethyl methacrylate, and on the other hand, at least one rubber like polymer. Examples of rubber-like polymer are described in WO-A-2009024496, which examples of rubber-like polymer are incorporated herein by reference. Particularly preferred is a blend of polycarbonate and the rubber-like polymer. The rubber- like polymer is or contains an elastomeric (i.e. rubbery) polymer having preferably a Tg less than about 10 °C, more specifically less than about -10 °C, or more specifically about -20 °C to -80 °C.

Examples of elastomeric polymers include polyisoprene; butadiene based rubbers like polybutadiene, styrene-butadiene random copolymer and block copolymer, hydrogenates of said block copolymers, acrylonitrile-butadiene copolymer and butadiene-isoprene copolymer; acrylate based rubbers like ethylene- methacrylate and ethylene-butylacrylate, acrylate ester-butadiene copolymers, for example acrylic elastomeric polymers such as butylacrylate-butadiene copolymer; siloxane based rubbers like polyorganosiloxanes such as for example polydimethylsiloxane, polymethylphenylsiloxane and dimethyldiphenylsiloxane copolymer; and other elastomeric polymers like ethylene-propylene random copolymer and block copolymer, copolymers of ethylene and [alpha]-olefins, copolymers of ethylene and aliphatic vinyl such as ethylene-vinyl acetate, and ethylene-propylene non- conjugated diene terpolymers such as ethylene-propylene-hexadiene copolymer, butylene-isoprene copolymer, and chlorinated polyethylene, and these substances may be used individually or in combinations of two or more.

Particularly preferred elastomeric polymers include ABS resin (acrylonitrile- butadienestyrene copolymer), AES resin (acrylonitrile-ethylene-propylene-styrene copolymer), AAS resin (acrylonitrile-acrylic elastomer-styrene copolymer), and MBS (methyl methacrylate butadiene styrene copolymer). Particularly preferred graft copolymers are acrylonitrile butadiene styrene rubber (ABS), methylmethacrylate butadiene styrene rubber (MBS) or a mixture of these copolymers, because of the high compatibility between the polycarbonate matrix and such copolymers, thereby enabling that these copolymers can be uniformly dispersed into the polycarbonate matrix. This decreases any degradation of the thermoplastic resin that may be caused by certain types of component b). From an economic point of view acrylonitrile butadiene styrene (ABS) is even more preferred. Any commercially available ABS may be applied. Particularly preferred acrylonitrile butadiene styrene (ABS) is acrylonitrile butadiene styrene with a rubber content of 10 to 50 parts by weight, preferably 10 to 40 parts by weight and even more preferably 10 to 30 parts by weight.

Preferably, the concentration of the rubber-like polymer in the thermoplastic resin a) is 0-60 wt% of the amount of the thermoplastic resin a).

The thermoplastic composition according to the present invention may further comprise c) a mineral filler selected from the group consisting of mica, talk and wollastonite, preferably in an amount of at least 1 wt% with respect to the weight of the total composition. Preferably, the amount of the mineral filler is at most 10 wt%.

The thermoplastic composition according to the invention may further comprise from 0 up to 25 wt% of one or more other additives, relative to the total weight of the composition. These include the customary additives such as stabilizers against thermal or thermo-oxidative degradation, stabilizers against hydrolytic degradation, stabilizers against degradation from light, in particular UV light, and/or photo-oxidative degradation, anti-drip agents such as for example PTFE, processing aids such as release agents and lubricants, colourants such as pigments and dyes. Suitable examples of such additives and their customary amounts are stated in the aforementioned Kunststoff Handbuch, 3/1.

Preferably, the thermoplastic composition according to the present invention comprises a) 65-99 wt% of the thermoplastic resin, b) 1-25 wt% of the laser direct structuring additive, and c) 0-10 wt% of the mineral filler. The thermoplastic composition according to the present invention may further comprise 0-25 wt%, preferably 0.5-5 wt%, of the other additives. Thus, total amounts of the components a), b) and c) is 75-100 wt%, preferably 95-99.5 wt%, with respect to the total weight of the composition.

In preferred embodiments, the thermoplastic composition according to the present invention comprises a) 70-97 wt% of the thermoplastic resin and b) 1-10 wt% of the laser direct structuring additive, wherein the total amount of the components a) and b) is 95-99.5 wt% with respect to the total weight of the composition and wherein the thermoplastic resin comprises 20-40 wt% of a rubber-like polymer with respect to the amount of the thermoplastic resin.

The components b) and other optional additives as described above may be introduced into the thermoplastic resin a) by means of suitable mixing devices such as single-screw or twin-screw extruders, preferably a twin-screw extruder is used. Preferably, thermoplastic resin pellets are introduced into the extruder together with at least components b) and extruded, then quenched in a water bath and then pelletized. The invention therefore further relates to a process for producing a thermoplastic composition according to the present invention by melt mixing components a), b) and other additives and reinforcing agents.

The invention further relates to moulded parts that contains the thermoplastic composition according to the present invention. The invention relates in particular to a moulded part produced by injection moulding of the composition according to the invention. The invention further also relates to an article, in particular a circuit carrier, that contains a moulded part produced from the composition according to the invention. In one embodiment, such a circuit carrier is used for producing an antenna.

The invention further relates to a process for producing such a circuit carrier which process comprises the steps of providing a moulded part that contains the thermoplastic composition according to the present invention, irradiating areas of said part on which conductive tracks are to be formed with laser radiation, and subsequently metallizing the irradiated areas. In a preferred embodiment, the laser irradiation is used to simultaneously release metal nuclei and effect ablation of the part while forming an adhesion-promoting surface. This provides a simple means to achieve excellent adhesive strength of the deposited metallic conductor tracks. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallization is preferably performed by immersing the moulded part in at least one electroless plating bath to form electrically conductive pathways on the irradiated areas of the moulded part. Non-limiting examples of electroless plating processes are a copper plating process, gold plating process, nickel plating process, silver plating, zinc plating and tin plating.

The invention will now be elucidated with reference to the following examples and comparative experiments.

### EXAMPLES

The compositions of Comparative Experiment CEx 1 and of the Example Ex 1 were prepared from the components as given in Table 1. Additionally, additives for processing and stabilization were added. These additives include Mold Release Agent (Loxiol P861/3.5, supplied by Cognis), Heat Stabilizer (Irgafos 168, supplied by BASF), Antioxidant (Irganox 1076, supplied by BASF), and Mono Zinc Phosphate (Z 21-82, supplied by Budenheim).

The compositions and the particle size of the LDS additives 1 and 2 are given in Table 2.

The compositions of the LDS additives were measured by X-ray fluorescence analysis. The amounts of each of the metals present in the metal compound were determined by X-ray fluorescence analysis. XRF analysis was done using AXIOS WDXRF spectrometer from PANalytical, in conjunction with the software Omnian. The samples were pressed into measuring discs and the analysis of the measuring discs were performed in vacuum atmosphere.

The particle size was determined by light scattering technology using Microtrac full range analyzer (FRA).

All sample compositions were prepared according the amounts as given in Table 3. All amounts are in weight percentage. In each of the experiments, samples were extruded on a co-rotating twin screw extruder at a temperature of 280°. The extrudate was granulated and the collected granulate was dried for 4 hours at a temperature of 100°C and subsequently injection moulded into plaques of 70*50*2mm and ASTM-sized Izod bars (64*12.7*3.2 mm) using a melt temperature of approximately 260°C-270°C.

Izod Notched impact strength was measured according to ISO180/4A at a temperature of 23°C and -20°C.

Plating performance was judged after laser activation of the injection molded plaques using different laser power and frequency and a subsequent plating procedure in an electroless McDermid MID100B1 plating bath. Plating performance was judged according to the thickness of the copper layer that was built up in approximately 30 to 60 minutes, depending on the deposition speed. The copper thickness was measured using an X-ray fluorescence measurement technique. Since the deposition speed of the copper build up is highly dependent on the condition of the plating bath, a reference material was included that is known to give a stable copper build up performance. The plating performance of the tested material is given by the so called Plating Index, which is the ratio of the copper thickness of the tested material to the copper thickness that is build up on the reference material. For the reference material Pocan DP 7102 is used and the plating time was set to build a copper thickness of approximately 3.5 to 5.5 µm on this reference material.

The plating was performed at 3-8 W, 60-100 kHz for 18 samples. The average plating index and the maximum plating index are shown in Table 3.

### Example 1 and Comparative Experiments 1

Table 3 shows the compositions and results of Comparative Example (CEx) 1 and Examples (Ex) 1.

CEx 1 and Ex 1 show that Cu(Cr,Mn)₂O₄ (LDS additive 2) results in a higher plating performance than CuCr₂O₄ (LDS additive 1).

Furthermore, Cu(Cr,Mn)₂O₄ resulted in a higher Izod notched impact, especially at a low temperature.

**Table 1**

| **Material** | **Type** | **Supplier** |
|---|---|---|
| Polycarbonate (PC) | LVN (ISO 1628/4) = 47.5 - 52.5 ml/g | MEP |
| ABS | Santac ST-55 | Mitsui Germany |
| MBS | Kane Ace M511 | Kaneka |
| LDS Additive 1 | Black 1G (CuCr₂O₄)* | Shepherd Color |
| | | Company |
| LDS Additive 2 | NK 11-1 (Cu(Cr,Mn)₂O₄)* | Tomatec |

| | | |
|---|---|---|
| * The amount of other metals in the compound is so low that these compounds are indicated by this formula by the supplier. | | |

**Table 2**

| **Material** | **LDS additive 1** | **LDS Additive 2** |
|---|---|---|
| Composition (wt%) | | |
| Cr | 62.4 | 59.8 |
| Cu | 37.4 | 33.4 |
| Mn | | 6.1 |
| Other | 0.2 | 0.7 |
| Particle size (µm) | | |
| D10 | 0.5 | 0.5 |
| D50 | 1.3 | 1.3 |
| D90 | 3.3 | 4.8 |

**Table 3**

| **Sample** | | **CEx 1** | **Ex 1** |
|---|---|---|---|
| Components | Units | | |
| PC | wt% | 56 | 56 |
| ABS | % | 30 | 30 |
| MBS | % | 5 | 5 |
| LDS Additive 1 | % | 8 | |
| LDS Additive 2 | % | | 8 |
| Other Additives | % | 1 | 1 |
| Total | % | 100 | 100 |
| | | | |
| Properties - Mechanical | | | |
| Izod Notched impact @ 23°C | kJ/m² | 57 | 61 |
| Izod Notched Impact @ -20°C | kJ/m² | 28 | 40 |
| | | | |
| Properties - Plating | | | |
| Average Plating Index | - | 0.69 | 0.74 |
| Maximum Plating Index | - | 0.92 | 0.92 |

## Claims

1. Thermoplastic composition comprising:
a) a thermoplastic resin and
b) a metal compound in an amount of at least 1 wt% with respect to the weight of the total composition,
wherein the metal compound is represented by the formula AB₂O₄, wherein A stands for copper and optionally one or more further metals and B stands for a combination of chromium and manganese and optionally one or more further metals.

2. Thermoplastic composition according to claim 1, wherein the component b) comprises at least 85 wt% of the total weight of Cu and Cr with respect to the total weight of the metals present in the metal compound.

3. Thermoplastic composition according to claim 1 or 2, wherein the component b) comprises at least 1 wt% of Mn with respect to the total weight of the metals present in the metal compound.

4. Thermoplastic composition according to any one of claims 1-3, wherein the component b) comprises at least 95 wt% of the total weight of Cu, Cr and Mn with respect to the total weight of the metals present in the metal compound..

5. Thermoplastic composition according to any one of claims 1-4, wherein the component b) is in the form of particles having a particle size D50 of 1-1.5 µm.

6. Thermoplastic composition according to any one of claims 1-5, wherein the thermoplastic composition comprises the laser direct structuring additive in an amount of between 2 wt% and 25 wt%, more preferably between 3 and 20 wt%, even more preferably between 4 wt% and 15 wt%, and particularly preferably from 5 wt% up to 10 wt%, with respect to the weight of the total composition.

7. Thermoplastic composition according to any one of claims 1-6, wherein the thermoplastic composition comprises the thermoplastic resin in an amount of 45-99 wt%, more preferably between 70 wt% and 97 wt%, with respect to the weight of the total composition.

8. Thermoplastic composition according to any one of claims 1-7, wherein the thermoplastic resin is a polycarbonate-based resin.

9. Moulded part containing the thermoplastic composition according to any one of claims 1-8.

10. Process for producing a circuit carrier, comprising providing the moulded part according to claim 9; irradiating areas of said part on which conductive tracks are to be formed with laser radiation; and subsequently metalizing the irradiated areas.

11. The circuit carrier obtainable by the process according to claim 10.

12. Use of a metal compound as an LDS additive in an LDS process, wherein the metal compound is represented by the formula AB₂O₄, wherein A stands for copper and optionally one or more further metals and B stands for a combination of chromium and manganese and optionally one or more further metals.

13. Use according to claim 12, wherein the metal compound comprises at least 1 wt% of Mn with respect to the total weight of the metals present in the metal compound.
